# FASCICULE DE BREVET EUROPEEN

(11) **EP 2 859 307 B1**
(45) Date de publication et mention de la délivrance du brevet: **14.09.2016**
(21) Numéro de dépôt: 13729298.3
(22) Date de dépôt: 07.06.2013
(51) Int. Cl.: E06B 9/64, E06B 9/68, E06B 9/72, G01C 9/00

(54) **PROCEDE D'INTERVENTION POUR L'INSTALLATION OU LA MAINTENANCE D'UN DISPOSITIF D'ENTRAINEMENT D'UN ECRAN ET CE DISPOSITIF**
ABLAUFVERFAHREN ZUM INSTALLIEREN ODER WARTEN EINER ANTRIEBSVORRICHTUNG EINER ABSCHIRMUNG SOWIE DEREN ANTRIEBSVORRICHTUNG
INTERVENTION PROCEDURE FOR THE INSTALLATION OR MAINTENANCE OF A SCREEN ACTUATOR AND ITS ACTUATOR

(30) Priorité: 07.06.2012 FR 1255346
(43) Date de publication de la demande: 15.04.2015
(73) Titulaire: Somfy SAS, 74300 Cluses (FR)
(72) Inventeur: BRUNO, Serge, F-74460 Marnaz (FR); DESBIOLLES, Claude, F-74800 Eteaux (FR); LAGARDE, Eric, F-74700 Sallanches (FR); LEMAITRE, Sébastien, F-74300 Cluses (FR)
(74) Mandataire: Bugnion Genève
(86) Numéro de dépôt international: PCT/EP2013/061755
(87) Numéro de publication internationale: WO 2013/182664

(56) Documents cités:
- DE-U1- 20 000 682

## Description

### DOMAINE TECHNIQUE DE L'INVENTION

L'invention se rapporte à une intervention en vue de l'installation ou de la maintenance d'un dispositif d'entraînement motorisé d'un écran. On parlera ici d'écran pour désigner de manière générique notamment des volets, tabliers, marquises, jalousies, persiennes, stores, toiles, rideaux, vélums ou grilles destinés à ce déployer et se rétracter, verticalement, horizontalement ou de façon oblique, notamment pour occulter des ouvertures dans les bâtiments ou protéger l'accès à de telles ouvertures, ou pour protéger du soleil ou de la pluie à l'extérieur, ou pour constituer des écrans de projection, de cloisonnement ou de décoration. L'invention se rapporte plus particulièrement à l'installation ou la maintenance d'un dispositif d'entraînement motorisé à arbre d'enroulement, c'est-à-dire d'un dispositif présentant un actionneur entraînant en rotation un arbre d'enroulement autour duquel s'enroule soit l'écran tel que défini plus haut, soit un ou plusieurs câbles liés à l'écran.

### ÉTAT DE LA TECHNIQUE ANTÉRIEURE

Les dispositifs d'entraînement à arbre d'enroulement sont généralement conçus, testés et qualifiés pour un positionnement horizontal de l'axe de rotation de l'arbre d'enroulement, qui peut souvent conditionner le bon enroulement et le bon déroulement, sans frottement excessif, sans bruit, sans coincement et sans usure prématurée. Lorsque ces dispositifs sont motorisés par des actionneurs électromécaniques, le bon positionnement de l'actionneur est lui-même critique et peut conditionner par exemple le couple résistant, la puissance et l'énergie consommée, mais aussi la détection automatique des fins de course, du sens de rotation ou d'obstacles. Il peut également conditionner l'esthétique de l'installation.

Un mauvais positionnement peut intervenir lors de l'installation du dispositif, et plus particulièrement de son montage sur un support fixe (par exemple un cadre d'ouverture ou un mur d'appui). Il peut également se produire postérieurement au montage, soudainement dans des conditions exceptionnelles, ou progressivement du fait du rodage du dispositif, ou de phénomènes d'usure ou de fluage de certaines pièces.

Le bon positionnement du dispositif d'entraînement à arbre d'enroulement est généralement contrôlé de façon visuelle à l'installation puis lors des maintenances.

Dans un autre contexte, l'utilisation d'un inclinomètre ou accéléromètre a été proposée pour le pilotage d'un dispositif d'entraînement à arbre d'enroulement. Dans le document DE 200 00 682 U est décrit un dispositif de store, marquise ou jalousie à arbre d'enroulement motorisé, pourvu d'un accéléromètre ou d'un inclinomètre placé sur la barre de charge du store et utilisé pour détecter en temps réel les effets dynamiques d'un événement extérieur sur le dispositif, et pour déclencher, toujours en temps réel, une action de prévention. Il peut s'agir notamment de détecter un vent violent, pour déclencher l'enroulement du dispositif, une intrusion pour déclencher une alarme, un blocage pour déclencher l'arrêt du moteur.

L'objectif de cette détection est de caractériser des événements extérieurs pouvant perturber le fonctionnement d'un dispositif installé. Les dispositifs ne sont toutefois pas aptes à détecter un mauvais positionnement de l'actionneur ou de l'arbre d'enroulement lors de l'installation. Ils ne permettent pas non plus de contrôler le positionnement de l'actionneur ou de l'arbre d'enroulement au cours du temps.

### EXPOSE DE L'INVENTION

L'invention vise à remédier aux inconvénients de l'état de la technique et à proposer des moyens permettant de faciliter l'installation ou la maintenance d'un dispositif d'entraînement à arbre d'enroulement.

Suivant un premier aspect de l'invention, celle-ci a trait à un procédé d'intervention pour l'installation ou la maintenance d'un dispositif d'entraînement d'un écran, comportant au moins un arbre d'enroulement entraîné par un actionneur électromécanique entre au moins une position enroulée et une position déroulée, le dispositif étant pourvu d'au moins une unité de détection d'inclinaison associée à au moins un axe géométrique de référence, le procédé comprenant une détection d'une inclinaison statique de l'axe de référence par l'unité de détection, l'axe de référence étant lié à l'actionneur ou à l'arbre d'enroulement.

En détectant ou mesurant l'inclinaison de l'axe de référence, par exemple au repos, il devient possible de détecter une inclinaison du dispositif non conforme, ce qui permet de déclencher le cas échéant une action corrective, par exemple un repositionnement ou un réglage particulier du dispositif.

On peut prévoir que la détection soit effectuée uniquement lorsque le dispositif d'entraînement se trouve dans un état prédéfini et/ou une position prédéfinie, par exemple au repos, ou plus spécifiquement au repos en position enroulée. On peut également prévoir que la détection soit effectuée uniquement lorsque que le dispositif d'entraînement se trouve dans certains états prédéfinis ou certaines positions prédéfinies, en nombre limité, par exemple un état au repos enroulé et un état au repos complètement déroulé. En détectant une inclinaison statique de l'axe de référence dans un état de prédéfini, par exemple à l'arrêt en position enroulée ou dans une pluralité d'états prédéfinis, on affine le diagnostic de positionnement non conforme.

L'étape de détection est de préférence effectuée lorsque l'actionneur est à l'arrêt. On peut prévoir une communication entre un circuit de commande de l'actionneur et l'unité de détection : selon une première variante, l'unité de détection interroge le circuit de commande pour déterminer si l'actionneur est à l'arrêt, avant d'effectuer la mesure d'inclinaison. Alternativement, on peut prévoir que le circuit de commande interroge, dans les mêmes conditions, l'unité de détection. On peut également prévoir que l'unité de détection interroge le circuit de commande pour déterminer la position de l'actionneur ou d'un arbre moteur de l'actionneur, pour déterminer si l'actionneur se trouve dans une position prédéfinie avant de débuter la détection.

Suivant un mode de réalisation, l'unité de détection comporte au moins un capteur d'inclinaison, qui peut être un accéléromètre ou un inclinomètre, par exemple un inclinomètre capacitif. Ce capteur doit être en mesure d'effectuer des mesures statiques d'inclinaison. Le signal délivré par le capteur peut être un signal binaire à deux états incliné/non incliné, ou, de préférence, un signal variant avec l'amplitude d'inclinaison. Le signal peut faire l'objet d'un traitement visant à en extraire la composante continue, par exemple un filtrage passe-bas, par exemple avec une fréquence de coupure inférieure à 5 Hz, de préférence inférieure à 1 Hz.

L'axe de référence est un axe géométrique fixe dans un référentiel fixe par rapport à un élément du dispositif. Ce peut être un axe géométrique fixe par rapport à un carter de l'actionneur ou par rapport à l'axe de rotation d'un arbre moteur de l'actionneur. L'accéléromètre et/ou l'inclinomètre peuvent par exemple être intégrés à l'actionneur, et notamment à son circuit de commande, et par exemple à une plaque de circuit imprimé de ce circuit de commande. L'axe de référence peut alors être lié au plan du circuit imprimé.

Suivant un autre mode de réalisation le capteur est intégré à une télécommande de l'actionneur, qu'une personne intervenant sur l'installation vient apposer sur une surface de référence du dispositif, par exemple une face de référence d'un carter de l'actionneur ou de l'arbre d'enroulement, définissant l'axe de référence.

Suivant un mode de réalisation, on prévoit l'émission par l'unité de détection d'un signal représentatif de l'inclinaison détectée de l'axe de référence ou d'un écart entre l'inclinaison détectée de l'axe de référence et une direction prédéfinie ou un plan prédéfini.

Suivant un mode de réalisation, l'émission d'un signal comporte au moins l'émission d'un signal perceptible par une personne intervenant sur le dispositif pour son installation ou sa maintenance, notamment un signal visuel ou auditif. On peut alors déclencher en fonction du signal une action corrective de repositionnement de l'axe de référence mise en oeuvre par la personne intervenant sur l'installation pour son installation ou son entretien.

On peut également prévoir l'émission d'un signal à destination du circuit de commande de l'actionneur. Suivant un mode de réalisation, on prévoit en outre une mémorisation de l'inclinaison détectée dans une mémoire associée à l'unité de détection, et la lecture différée de la mémoire, par exemple pour faciliter un diagnostic après démontage du dispositif et retour à l'atelier ou pour déclencher des procédures d'apprentissage.

Préférentiellement, l'action corrective de repositionnement vise à aligner l'axe de référence avec la direction prédéfinie, par exemple la direction horizontale, ou encore à replacer l'axe de référence dans le plan prédéfini.

Le signal émis par l'unité de détection peut également déclencher une action corrective au niveau de l'actionneur lui-même, par exemple pour décaler angulairement la position de l'arbre moteur, ou pour mettre l'actionneur hors service ou pour imposer un mode de fonctionnement particulier.

On peut prévoir que l'axe de référence soit confondu avec, parallèle ou perpendiculaire à un bord d'un circuit imprimé de l'actionneur. Suivant un mode de réalisation, l'axe de référence est parallèle à un axe de rotation d'un arbre moteur de l'actionneur électromécanique. La mesure de l'inclinaison de l'axe de rotation de l'actionneur est par exemple utile lorsqu'un organe de suspension destiné par exemple à limiter la transmission des vibrations et bruits parasites est interposé entre l'actionneur et l'arbre d'enroulement. En effet, un tel organe de suspension, qui peut être par exemple constitué par des plots en matériau élastomère, peut à l'usage voir ses caractéristiques se modifier, par exemple du fait d'un fluage ou d'une usure, et de ces modifications peut résulter un défaut d'alignement de l'axe de rotation de l'actionneur par rapport à l'arbre d'enroulement, d'où des frottements et bruits parasites, augmentant la puissance nécessaire et provoquant des usures. En diagnostiquant un tel défaut d'alignement, on livre à l'utilisateur ou à un opérateur de maintenance une information précieuse.

L'axe de référence peut être parallèle à ou confondu avec un axe de rotation de l'arbre d'enroulement du dispositif. En effet, l'horizontalité de l'arbre d'enroulement est un prérequis dans de nombreuses applications. Suivant un mode de réalisation particulier, l'actionneur et l'arbre d'enroulement sont disposés dans une barre de charge de l'écran, de la manière décrite par exemple dans la demande WO 2011EP073888. La détection en position enroulée de l'horizontalité de l'axe d'enroulement permet alors de s'assurer, lors de l'installation, de la fixation correcte de l'écran. Naturellement, on obtient la même information avec une unité de détection dont l'axe de référence est lié à l'actionneur lui-même si l'axe de rotation de l'arbre de l'actionneur et l'axe de rotation de l'arbre d'enroulement sont parallèles ou confondus.

On peut également prévoir que l'axe de référence soit perpendiculaire à un axe de rotation de l'actionneur ou de l'arbre d'enroulement, pour détecter un positionnement angulaire de l'arbre d'enroulement ou de l'arbre moteur autour de leur axe, ou pour déterminer le positionnement angulaire d'un support de l'arbre d'enroulement par rapport à l'horizontale.

Ainsi, suivant un mode de réalisation de l'invention, le signal transmis par l'unité de détection de l'inclinaison dont l'axe de référence est perpendiculaire à l'axe de rotation de l'arbre d'enroulement au circuit de commande de l'actionneur permet de réactiver une procédure automatique de reconnaissance ou d'apprentissage d'un sens d'enroulement ou de déroulement de l'arbre d'enroulement lorsque le signal se trouve dans une plage prédéterminée, procédure automatique qui peut avoir précédemment été désactivée lors d'un assemblage. Cette procédure est utile lorsque l'intelligence embarquée dans le circuit de commande de l'actionneur inclut une procédure d'apprentissage d'un sens d'enroulement et de déroulement en fonction du couple moteur nécessaire à l'entraînement de l'arbre d'enroulement, en supposant que ce couple sera différent lorsque l'écran se déroule et lorsqu'il s'enroule du fait de l'action de la pesanteur. Or cette supposition n'est correcte que si l'extrémité libre de l'écran se déplace verticalement de manière significative durant l'enroulement et le déroulement. Il s'avère que chez certains assembleurs l'enroulement initial se fait à plat, à l'horizontale. Dans une telle configuration, la procédure automatique d'apprentissage ne peut être mise en oeuvre. L'unité de détection de l'inclinaison enregistre l'inclinaison de l'axe de référence au moment de la désactivation. Une variation consécutive dans une plage prédéterminée (par exemple autour de 90°) permet ainsi de déterminer si l'angle d'enroulement et de déroulement de l'écran est compatible avec la procédure d'apprentissage.

Suivant un autre mode de réalisation de l'invention, l'unité de détection est fixe par rapport à un carter de l'actionneur avec son axe de référence perpendiculaire à l'axe de rotation de l'actionneur. Le signal transmis au circuit de commande de l'actionneur permet de détecter une variation dans le temps du positionnement angulaire du carter de l'actionneur. Cette mesure est utile notamment lorsque l'actionneur est isolé mécaniquement de son entourage par des éléments de suspension et de filtration des vibrations, par exemple des plots en élastomère. L'élastomère peut avoir tendance à fluer dans le temps, ce qui peut provoquer progressivement une rotation du carter de l'actionneur autour de l'axe de rotation de l'arbre moteur. Il s'ensuit un décalage entre la position réelle de l'écran et la position estimée au niveau de l'actionneur, qui peut avoir pour effet un arrêt prématuré de l'enroulement du dispositif avant la rétractation totale de l'écran. En prévoyant que l'unité de détection ait un axe de référence associé au carter de l'actionneur, par exemple déterminé par apprentissage, et dirigé perpendiculairement à l'axe de rotation, on peut détecter la rotation du carter en position enroulée, voire la quantifier, et prévoir une action de correction, par exemple une action de reprogrammation de la position enroulée.

Naturellement, on peut prévoir au niveau de l'unité de détection de l'inclinaison plus d'une direction de référence, pour faire par exemple des mesures bidirectionnelles ou tridirectionnelles d'inclinaison statique, ce qui permet de combiner le cas échéant différents types de diagnostic et d'actions correctives.

Suivant un autre aspect de l'invention, celle-ci a trait à un procédé d'intervention pour l'installation ou la maintenance d'un dispositif motorisé d'entraînement à arbre d'enroulement comportant un actionneur d'entraînement tournant autour d'un axe de référence et au moins une unité de détection d'inclinaison comportant au moins un capteur accélérométrique et/ou inclinométrique, le procédé comportant :
- une détection de l'horizontalité de l'axe de référence par l'unité de détection ;
- l'émission par l'unité de détection d'un signal de défaut en cas d'écart d'horizontalité détecté au delà d'un seuil donné ;
- une action de rétablissement de l'horizontalité de l'axe de référence en réponse au signal de défaut.

Suivant un autre aspect de l'invention, celle-ci a trait à un dispositif d'entraînement motorisé comportant un arbre d'enroulement pour déployer et rétracter un écran, un actionneur électromécanique pour entraîner l'arbre d'enroulement entre au moins une position enroulée et une position déroulée, le dispositif comportant au moins une unité de détection d'inclinaison associée à un axe de référence et comportant au moins un capteur pour détecter statiquement une inclinaison de l'axe de référence en position enroulée.

Préférentiellement, l'unité de détection comporte au moins une interface pour émettre un signal représentatif de l'inclinaison détectée ou d'un écart entre l'inclinaison détectée et une direction prédéfinie.

Le dispositif peut également comporter une interface de fixation du dispositif ou de l'actionneur sur un support permettant un repositionnement de l'axe de référence en réponse au signal.

Suivant un mode de réalisation, le capteur est intégré à l'actionneur. Alternativement, le capteur est intégré à une télécommande de l'actionneur, le dispositif présentant une face de référence pour y poser la télécommande.

Le dispositif peut être équipé d'un étage de traitement du signal, qui peut comporter notamment un filtre passe-bas, numérique ou analogique.

Le dispositif peut en outre comporter une mémoire pour stocker un historique de l'inclinaison détectée et une interface d'interrogation de la mémoire.

L'axe de référence est de préférence un axe de rotation d'un arbre moteur de l'actionneur électromécanique. Préférentiellement, l'axe de référence est parallèle à ou confondu avec un axe de rotation de l'arbre d'enroulement du dispositif.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique en coupe longitudinale d'un dispositif motorisé d'enroulement d'un store selon un premier mode de réalisation de l'invention ;
- la figure 2, une vue schématique en coupe longitudinale d'un dispositif motorisé d'enroulement d'un store selon un deuxième mode de réalisation de l'invention ;
- la figure 3, une vue schématique en coupe transversale du dispositif de la figure 2 ;
- la figure 4, une vue schématique en coupe longitudinale d'un dispositif motorisé d'enroulement d'un store selon un troisième mode de réalisation de l'invention ;
- la figure 5, une vue schématique en coupe transversale d'un dispositif motorisé d'enroulement d'un store selon un quatrième mode de réalisation de l'invention ;
- la figure 6, une vue schématique en perspective du dispositif de la figure 5.

Pour plus de clarté, les éléments identiques seront repérés par des signes de référence identiques sur l'ensemble des figures.

### DESCRIPTION DETAILLEE D'UN MODE DE REALISATION

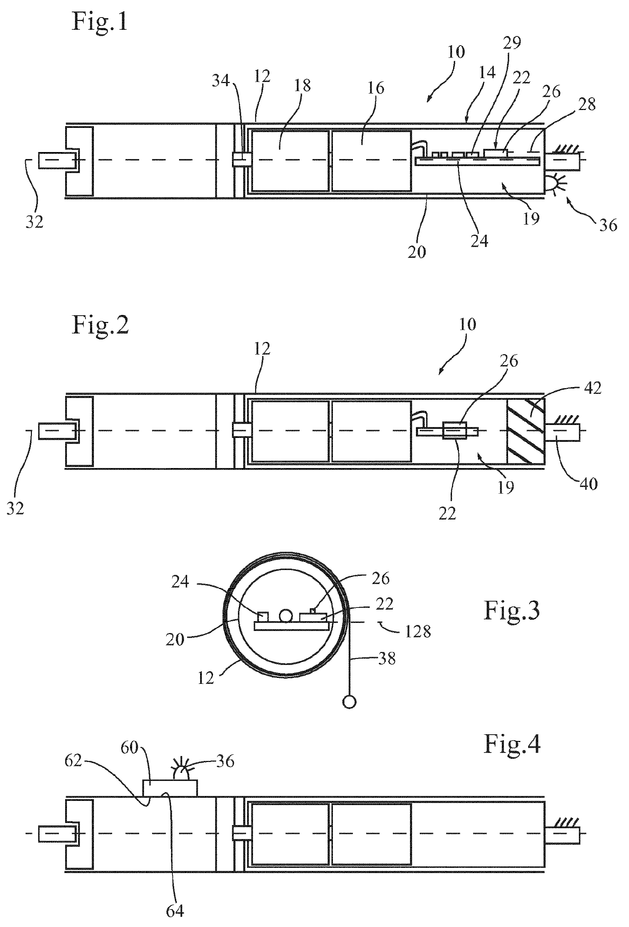

Sur la figure 1 est schématiquement illustré un dispositif motorisé 10 d'entraînement d'un écran, comportant un arbre ou tube d'enroulement 12 à l'intérieur duquel est disposé un actionneur 14 électromécanique d'entraînement comprenant un moteur 16, un réducteur de vitesse 18, une unité électronique de commande 19, logés dans un carter tubulaire 20.

L'unité électronique de commande 19 comprend une unité de détection d'inclinaison 22, fixée sur un circuit imprimé 24 de l'unité électronique de commande 19 de l'actionneur 14. Cette unité de détection 22 comporte au moins un inclinomètre 26 pour détecter une inclinaison d'un axe de référence 28 de l'inclinomètre, notamment par rapport à l'horizontale. L'inclinomètre 26 peut par exemple être un inclinomètre mono-axial capacitif miniature à électronique intégrée. Dans ce premier exemple de réalisation, l'axe de référence 28 est un axe passant par le plan du circuit imprimé 24, par exemple un axe de symétrie du circuit imprimé 24. L'axe de référence 28 est parallèle à l'axe de rotation 32 de l'arbre de sortie 34 de l'actionneur 14.

Le dispositif motorisé 10 comporte en outre une interface visuelle ou auditive 36, par exemple une diode clignotante, un buzzer ou des moyens pour actionner un mouvement de l'écran, pour émettre un signal visuel représentatif de l'inclinaison détectée ou d'un écart entre l'inclinaison détectée et une plage prédéterminée de valeurs, repérable par une personne intervenant sur le dispositif pour son installation ou sa maintenance.

Lors de l'installation, l'opérateur met en oeuvre le procédé de détection. L'unité de détection fournit une donnée relative à l'inclinaison détectée à une unité d'analyse d'inclinaison 29, par exemple comprise dans l'unité électronique de commande 19 de l'actionneur. Cette unité d'analyse 29 met en oeuvre l'interface visuelle ou auditive 36, qui indique alors, par exemple par des clignotements de fréquence variable avec l'inclinaison, la proximité de l'alignement de l'axe de référence 28 avec l'horizontale. Lorsque l'installateur est satisfait de l'inclinaison, il termine son installation et fixe le dispositif. Diverses ergonomies possibles peuvent être utilisées pour débuter et/ou terminer la détection d'inclinaison.

Sur les figures 2 et 3, on a illustré un deuxième exemple de réalisation d'un dispositif d'entraînement 10 à arbre d'enroulement 12 pour un écran 38. Pour éviter les répétitions, on se référera à la description du premier mode de réalisation pour les éléments communs aux deux modes de réalisation. Le dispositif 10 présente un actionneur électromécanique 14 logé dans un tube d'enroulement 20 et fixé par rapport à celui-ci, par l'intermédiaire d'un ou plusieurs blocs élastomères 42 ou autre dispositif d'absorption de vibrations de part et d'autre de l'actionneur 14. Les élastomères, du fait de leur nature de matériau souple sont susceptibles de fluer (déformation mécanique de l'élastomère du fait de l'application de la charge due au poids de l'écran déportée par rapport à l'axe de rotation), ce qui au cours du temps, entraine une légère rotation du carter de l'actionneur autour de son axe et une déviation de la position repérée de l'écran par l'unité électronique de commande 19. Pour détecter un éventuel fluage de l'élastomère, une unité de détection 22, fixée par rapport au carter de l'actionneur, est pourvue d'un inclinomètre 26 dont la direction de référence 128 est perpendiculaire à l'axe de rotation 32 de l'actionneur. L'unité de détection 22 est reliée à l'unité électronique de commande 19 de l'actionneur 14. Lorsque l'actionneur 14 est à l'arrêt dans une position de référence, par exemple la position enroulée, l'unité électronique de commande 19 interroge l'unité de détection 22 qui lui retourne un signal d'inclinaison. Si ce signal d'inclinaison dépasse une valeur donnée ou se trouve hors d'une plage de valeurs prédéterminée, l'unité électronique de commande 19 met à jour la position réelle (en fraction de nombre de tours) de l'arbre d'enroulement 12 de manière à compenser le fluage de l'élastomère. Ainsi, si différents écrans sont installés à un même étage d'une façade, le procédé permet de rééquilibrer les variations au cours du temps pour chaque écran et de conserver un alignement des différents écrans.

Sur la figure 4 est illustré un troisième exemple de dispositif d'entraînement 10 à arbre d'enroulement 12. Celui-ci comprend un boîtier de télécommande 60 nomade dans lequel est intégré une unité de détection d'inclinaison 22. Le boîtier de télécommande présente une face de référence 62 posée sur une face de référence 64 correspondante de l'arbre d'enroulement 12, à l'arrêt. Dans cet exemple de réalisation, l'interface visuelle ou auditive 36 peut être également comprise dans le boîtier de télécommande 60, ainsi que les moyens d'analyse d'inclinaison. On mesure ainsi directement une éventuelle inclinaison de l'axe de l'arbre d'enroulement 12 ou de l'actionneur 14 logé à l'intérieur de l'arbre d'enroulement 12. L'installateur est informé, au travers de l'interface visuelle ou auditive 36 de l'inclinaison du dispositif d'entraînement, qu'il peut alors éventuellement corriger.

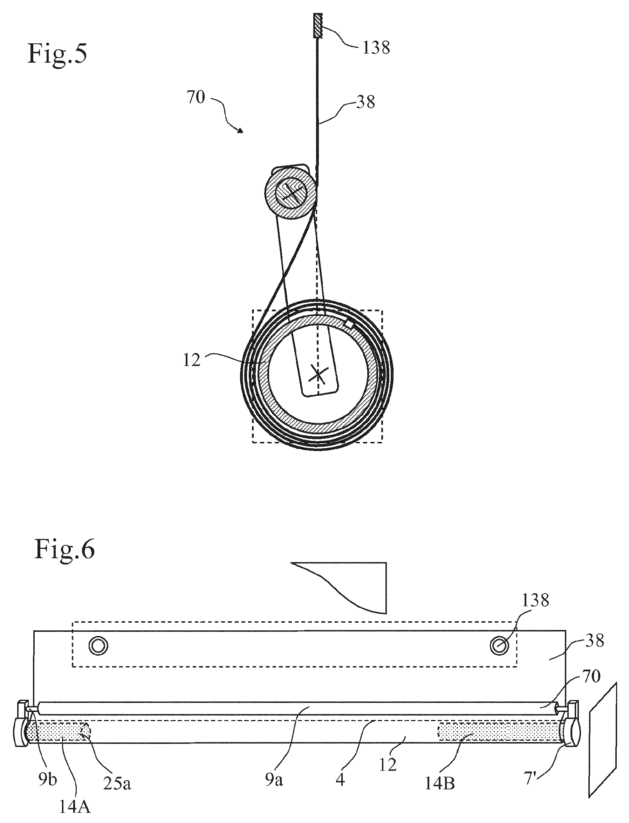

Sur les figures 5 et 6 est représenté un dispositif d'entraînement 10 à arbre d'enroulement 12 constituant simultanément une barre de charge d'un écran 38 suspendu par une extrémité 138 à une structure fixe telle qu'un encadrement d'ouverture d'un bâtiment. Le dispositif d'entraînement 10 comporte un tube d'enroulement 12 à l'intérieur duquel est logé un actionneur 14 ainsi qu'une unité d'alimentation, par exemple un ensemble de piles ou d'accumulateurs. Le carter de l'actionneur 14 est solidaire d'un bras de balancier 70 qui vient en appui contre la partie déployée de l'écran 38, de manière à compenser le couple de déroulement de l'écran et à maintenir l'arbre d'enroulement sans autre liaison avec un bâti. Une unité de détection d'inclinaison 22 est associée soit au carter de l'actionneur, soit à l'arbre d'enroulement, soit au bras, pour détecter, lors de la fixation de l'extrémité au mur, l'horizontalité de l'axe de rotation de l'arbre d'enroulement (qui dans cet exemple est confondu avec l'axe de rotation de l'actionneur 14). De la même manière que dans les exemples de réalisation précédemment décrits, l'unité de détection 22 fournit une donnée relative à l'inclinaison détectée à une unité d'analyse d'inclinaison 29, par exemple l'unité électronique de commande de l'actionneur ou une unité comprise dans un boîtier de télécommande 60 nomade. Cette unité d'analyse 29 met en oeuvre l'interface visuelle ou auditive 36, qui indique alors, par exemple par des clignotements de fréquence variable avec l'inclinaison, la proximité de l'alignement de l'axe de référence 28 avec l'horizontale. Lorsque l'installateur est satisfait de l'inclinaison, il termine son installation et fixe le dispositif. Diverses ergonomies possibles peuvent être utilisées pour débuter et/ou terminer la détection d'inclinaison, comme précédemment.

L'inclinaison du bras de levier ou du circuit imprimé de l'unité électronique de commande de l'actionneur dépendant de la position de déroulement de l'écran, une position particulière, par exemple une position de fin de course basse, peut également être repérée en lien avec la détection d'inclinaison. Avantageusement, la donnée d'inclinaison correspondant à cette position particulière est enregistrée et réutilisée pour le réglage d'un deuxième écran similaire.

Dans les différents exemples de réalisation, l'unité de détection d'inclinaison ou l'unité d'analyse peut comprendre une mémoire pour stocker un historique de la ou des inclinaisons détectées. Le dispositif comprend par ailleurs une interface d'interrogation de la mémoire, par exemple au niveau d'un outil nomade d'aide à l'installation. Les données ainsi recueillies peuvent être utilisées immédiatement ou en différé, pour du diagnostic de panne, de la maintenance en local ou à distance ou pour le lancement de procédures d'apprentissage. En particulier, un montage non-conforme, notamment incliné ou vertical d'un actionneur prévu pour une utilisation horizontale, peut facilement être détecté, y compris lorsque l'actionneur est retourné, une fois démonté de son installation) vers un service après-vente. Par ailleurs, un désalignement entre l'actionneur et l'arbre d'enroulement, par exemple dans le cas d'un moteur monté dans un rail et entraînant en rotation une barre, ayant pour conséquence une création de bruits parasites et/ou une perte de rendement, peut également être diagnostiqué. Suivant un autre exemple, l'installation sur site d'un actionneur peut être distinguée d'un montage à plat par comparaison entre l'inclinaison détectée et une valeur d'inclinaison préenregistrée. Une procédure d'apprentissage qui n'aurait pu avoir lieu lors du montage à plat peut alors être lancée.

De nombreuses variantes sont envisagées. L'homme du métier peut notamment prévoir de combiner divers éléments des divers exemples et modes de réalisation envisagés. Il peut notamment prévoir de détecter l'inclinaison dans deux ou trois directions, soit en vue d'affiner la précision d'une mesure, soit pour déclencher des actions correctives différentes.

## Revendications

1. Procédé d'intervention pour l'installation ou la maintenance d'un dispositif d'entraînement (10) d'un écran (38), comportant au moins un arbre d'enroulement (12) entraîné par au moins un actionneur électromécanique (14, 14A, 14B) entre au moins une position enroulée et une position déroulée, le dispositif étant pourvu d'au moins une unité de détection d'inclinaison (22) associée à au moins un axe de référence (28, 128), le procédé étant **caractérisé par** une détection d'une inclinaison statique de l'axe de référence (28, 128) par l'unité de détection (22), l'axe de référence étant lié à l'actionneur (14, 14A, 14B) ou à l'arbre d'enroulement (12).

2. Procédé d'intervention selon la revendication 1, **caractérisé en ce que** l'unité de détection (22) comporte au moins un capteur d'inclinaison (26).

3. Procédé d'intervention selon la revendication 2, **caractérisé en ce que** le capteur (26) est intégré à l'actionneur (14, 14A, 14B).

4. Procédé d'intervention selon la revendication 2, **caractérisé en ce que** le capteur (26) est intégré à une télécommande (60) de l'actionneur (14, 14A, 14B), qu'une personne intervenant sur l'installation vient apposer sur une surface de référence (64) du dispositif.

5. Procédé d'intervention selon l'une quelconque des revendications précédentes, **caractérisé par** l'émission par l'unité de détection (22) d'un signal représentatif de l'inclinaison détectée de l'axe de référence (28, 128) ou d'un écart entre l'inclinaison détectée de l'axe de référence (28, 128) et une direction prédéfinie ou un plan prédéfini.

6. Procédé d'intervention selon la revendication 5, **caractérisé en ce que** l'émission d'un signal comporte au moins l'émission d'un signal perceptible par une personne intervenant sur le dispositif (10) pour son installation ou sa maintenance, notamment un signal visuel ou auditif.

7. Procédé d'intervention selon l'une quelconque des revendications 5 ou 6, **caractérisé par** une action corrective de repositionnement de l'axe de référence (28, 128) en réponse au signal, par une personne intervenant sur l'installation (10) pour son installation ou son entretien.

8. Procédé d'intervention selon l'une quelconque des revendications 5 à 7, **caractérisé en ce que** l'émission d'un signal comporte au moins l'émission d'un signal à destination d'un circuit de commande (24) du dispositif.

9. Procédé d'intervention selon la revendication 8, **caractérisé en ce qu'**il comporte en outre une mémorisation de l'inclinaison détectée dans une mémoire associée à l'unité de détection, et la lecture différée de la mémoire.

10. Procédé d'intervention selon l'une quelconque des revendications 8 ou 9, **caractérisé en ce que** le signal déclenche une action corrective par le circuit de commande (24) de l'actionneur (14, 14A, 14B).

11. Procédé d'intervention selon la revendication 10, **caractérisé en ce que** l'action corrective est une action de repositionnement réalisée par l'actionneur (14).

12. Procédé d'intervention selon la revendication 7 ou la revendication 11, **caractérisé en ce que** l'action de repositionnement vise à aligner l'axe de référence (28, 128) avec la direction prédéfinie ou à replacer l'axe de référence dans le plan prédéfini.

13. Procédé d'intervention selon l'une quelconque des revendications précédentes, **caractérisé en ce que** l'axe de référence (28) est confondu avec, parallèle ou perpendiculaire à l'axe de rotation (32) de l'arbre moteur (34) de l'actionneur électromécanique (14) ou de l'arbre d'enroulement.

14. Procédé d'intervention selon l'une quelconque des revendications 1 à 12, **caractérisé en ce que** l'axe de référence (128) est confondu avec, parallèle ou perpendiculaire à un bord d'un circuit imprimé (24) de l'actionneur (14).

15. Procédé d'intervention selon la revendication 14 et la revendication 8, **caractérisé en ce que** le circuit de commande (24) inhibe ou réactive une procédure de reconnaissance ou d'apprentissage d'un sens d'enroulement ou de déroulement de l'arbre d'enroulement lorsque le signal se trouve dans une plage prédéterminée.

16. Procédé d'intervention selon l'une quelconque des revendications précédentes, caractérisé que la détection d'une inclinaison statique de l'axe de référence (28, 128) par l'unité de détection (22) est effectuée uniquement à l'arrêt.

17. Procédé d'intervention selon l'une quelconque des revendications précédentes, caractérisé que la détection d'une inclinaison statique de l'axe de référence (28, 128) par l'unité de détection (22) est effectuée uniquement dans une position prédéfinie, ou dans un nombre limité de positions prédéfinies de l'arbre d'enroulement (12).

18. Dispositif d'entraînement motorisé (10) comportant au moins un arbre d'enroulement (12) pour déployer et rétracter un écran (38), au moins un actionneur électromécanique (14, 14A, 14B) pour entraîner l'arbre d'enroulement (12) entre au moins une position enroulée et une position déroulée, **caractérisé en ce que** le dispositif comporte au moins une unité de détection d'inclinaison (22) associée à au moins un axe de référence (28, 128) lié à l'actionneur ou à l'arbre d'enroulement et comportant au moins au moins un capteur (26) pour détecter statiquement une inclinaison de l'axe de référence (28, 128).

19. Dispositif selon la revendication précédente, **caractérisé en ce que** l'unité de détection comporte au moins une interface (26) pour émettre au moins un signal représentatif de l'inclinaison détectée ou d'un écart entre l'inclinaison détectée et une direction prédéfinie.

20. Dispositif selon la revendication précédente, **caractérisé en ce que** le signal émis est un signal perceptible par une personne intervenant sur le dispositif pour son installation ou sa maintenance, notamment un signal visuel ou auditif.

21. Dispositif selon la revendication 18, **caractérisé en ce que** le capteur (26) est un inclinomètre.

22. Dispositif selon la revendication 18 ou la revendication 21, **caractérisé en ce que** le capteur (26) est intégré à l'actionneur.

23. Dispositif selon la revendication 18 ou la revendication 21, **caractérisé en ce que** le capteur (26) est intégré à une télécommande (60) de l'actionneur, le dispositif présentant une face de référence (64) pour y poser une face de référence (62) de la télécommande (60).

24. Dispositif selon l'une quelconque des revendications 18 à 23, **caractérisé en ce qu'**il comporte en outre une mémoire pour stocker un historique de l'inclinaison détectée et une interface d'interrogation de la mémoire.

## Patentansprüche

1. Ablaufverfahren für die Installation oder die Wartung einer Antriebsvorrichtung (10) einer Abschirmung (38), umfassend mindestens eine von mindestens einem elektromechanischen Aktuator (14, 14A, 14B) zwischen mindestens einer aufgerollten Position und einer abgerollten Position angetriebenen Wickelwelle (12), wobei die Vorrichtung mit mindestens einer Neigungsdetektionseinheit (22) ausgestattet ist, die mindestens einer Referenzachse (28, 128) zugeordnet ist, wobei das Verfahren durch die Detektion einer statischen Neigung der Referenzachse (28, 128) durch die Detektionseinheit (22) gekennzeichnet ist, wobei die Referenzachse mit dem Aktuator (14, 14A, 14B) oder mit der Wickelwelle (12) verbunden ist.

2. Ablaufverfahren nach Anspruch 1, **dadurch gekennzeichnet, dass** die Detektionseinheit (22) mindestens einen Neigungssensor (26) aufweist.

3. Ablaufverfahren nach Anspruch 2, **dadurch gekennzeichnet, dass** der Sensor (26) in den Aktuator (14, 14A, 14B) integriert ist.

4. Ablaufverfahren nach Anspruch 2, **dadurch gekennzeichnet, dass** der Sensor (26) in eine Fernsteuerung (60) des Aktuators (14, 14A, 14B) integriert ist, den eine Person, die an der Anlage einen Eingriff vornimmt, auf einer Referenzfläche (64) der Vorrichtung anbringt.

5. Ablaufverfahren nach einem der vorangehenden Ansprüche, das durch die Emission durch die Detektionseinheit (22) eines für die festgestellte Neigung der Referenzachse (28, 128) oder eine Differenz zwischen der festgestellten Neigung der Referenzachse (28, 128) und einer vorbestimmten Richtung oder einer vorbestimmten Ebene repräsentativen Signals gekennzeichnet ist.

6. Ablaufverfahren nach Anspruch 5, **dadurch gekennzeichnet, dass** die Emission eines Signals mindestens die Emission eines für eine an der Vorrichtung (10) für ihre Installation oder ihre Wartung arbeitende Person wahrnehmbaren Signals, vor allem eines visuellen oder akustischen Signals, aufweist.

7. Ablaufverfahren nach einem der Ansprüche 5 oder 6, das durch eine korrektive Aktion der Neupositionierung der Referenzachse (28, 128) als Antwort auf das Signal durch eine an der Anlage (10) für ihre Installation oder ihre Wartung arbeitende Person gekennzeichnet ist.

8. Ablaufverfahren nach einem der Ansprüche 5 bis 7, **dadurch gekennzeichnet, dass** die Emission eines Signals mindestens die Emission eines Signals an einen Steuerkreis (24) der Vorrichtung aufweist.

9. Ablaufverfahren nach Anspruch 8, **dadurch gekennzeichnet, dass** es ferner eine Speicherung der festgestellten Neigung in einem der Detektionseinheit zugeordneten Speicher und das versetzte Lesen des Speichers aufweist.

10. Ablaufverfahren nach einem der Ansprüche 8 oder 9, **dadurch gekennzeichnet, dass** das Signal eine korrektive Aktion durch den Steuerkreis (24) des Aktuators (14, 14A, 14B) auslöst.

11. Ablaufverfahren nach Anspruch 10, **dadurch gekennzeichnet, dass** die korrektive Aktion eine von dem Aktuator (14) durchgeführte Neupositionierungsaktion ist.

12. Ablaufverfahren nach Anspruch 7 oder Anspruch 11, **dadurch gekennzeichnet, dass** die Neupositionierungsaktion darauf abzielt, die Referenzachse (28, 128) in der vorbestimmten Richtung auszurichten oder die Referenzachse wieder in der vorbestimmten Ebene zu platzieren.

13. Ablaufverfahren nach einem der vorangehenden Ansprüche, **dadurch gekennzeichnet, dass** die Referenzachse (28) mit parallel oder senkrecht zur Rotationsachse (32) der Motorwelle (34) des elektromechanischen Aktuators (14) oder der Wickelwelle zusammenfällt.

14. Ablaufverfahren nach einem der Ansprüche 1 bis 12, **dadurch gekennzeichnet, dass** die Referenzachse (128) mit parallel oder senkrecht zu einem Rand einer gedruckten Schaltung (24) des Aktuators (14) zusammenfällt.

15. Ablaufverfahren nach Anspruch 14 und Anspruch 8, **dadurch gekennzeichnet, dass** der Steuerkreis (24) ein Wiedererkennungs- oder Lernverfahren einer Auf- oder Abwickelrichtung der Wickelwelle hemmt oder reaktiviert, wenn sich das Signal in einem vorbestimmten Bereich befindet.

16. Ablaufverfahren nach einem der vorangehenden Ansprüche, **gekennzeichnet dadurch, dass** die Detektion einer statischen Neigung der Referenzachse (28, 128) durch die Detektionseinheit (22) nur bei Stillstand durchgeführt wird.

17. Ablaufverfahren nach einem der vorangehenden Ansprüche, **gekennzeichnet dadurch, dass** die Detektion einer statischen Neigung der Referenzachse (28, 128) durch die Detektionseinheit (22) nur in einer vorbestimmten Position oder in einer begrenzten Anzahl vorbestimmter Positionen der Wickelwelle (12) durchgeführt wird.

18. Motorisierte Antriebsvorrichtung (10), umfassend mindestens eine Wickelwelle (12), um eine Abschirmung (38) aus- und einzufahren, mindestens einen elektromechanischen Aktuator (14, 14A, 14B), um die Wickelwelle (12) zwischen mindestens einer aufgerollten Position und einer abgerollten Position anzutreiben, **dadurch gekennzeichnet, dass** die Vorrichtung mindestens eine Neigungsdetektionseinheit (22) aufweist, die mindestens einer mit dem Aktuator oder mit der Wickelwelle verbundenen Referenzachse (28, 128) zugeordnet ist und mindestens mindestens einen Sensor (26) aufweist, um eine Neigung der Referenzachse (28, 128) statisch festzustellen.

19. Vorrichtung nach vorangehendem Anspruch, **dadurch gekennzeichnet, dass** die Detektionseinheit mindestens eine Schnittstelle (26) aufweist, um mindestens ein für die festgestellte Neigung oder eine Differenz zwischen der festgestellten Neigung und einer vorbestimmten Richtung repräsentatives Signal zu senden.

20. Vorrichtung nach vorangehendem Anspruch, **dadurch gekennzeichnet, dass** das gesendete Signal ein von einer an der Vorrichtung für ihre Installation oder ihre Wartung arbeitenden Person wahrnehmbares Signal, vor allem ein visuelles oder akustisches Signal, ist.

21. Vorrichtung nach Anspruch 18, **dadurch gekennzeichnet, dass** der Sensor (26) ein Neigungsmesser ist.

22. Vorrichtung nach Anspruch 18 oder Anspruch 21, **dadurch gekennzeichnet, dass** der Sensor (26) in den Aktuator integriert ist.

23. Vorrichtung nach Anspruch 18 oder Anspruch 21, **dadurch gekennzeichnet, dass** der Sensor (26) in eine Fernsteuerung (60) des Aktuators integriert ist, wobei die Vorrichtung eine Referenzfläche (64) aufweist, um dort eine Referenzfläche (62) der Fernsteuerung (60) anzubringen.

24. Vorrichtung nach einem der Ansprüche 18 bis 23, **dadurch gekennzeichnet, dass** sie ferner einen Speicher zum Speichern eines Verlaufs der ermittelten Neigung und eine Abfrageschnittstelle des Speichers aufweist.

## Claims

1. An operating method for the installation or maintenance of a driving device (10) for a screen (38), including at least one winding shaft (12) driven by at least one electromechanical actuator (14, 14A, 14B) between at least one wound position and one unwound position, the device being provided with at least one incline detecting unit (22) associated with at least one reference axis (28, 128), the method being **characterized by** a detection of a static incline of the reference axis (28, 128) by the detection unit (22), the reference axis being connected to the actuator (14, 14A, 14B) or to the winding shaft (12).

2. The operating method according to claim 1, **characterized in that** the detection unit (22) includes at least one incline sensor (26).

3. The operating method according to claim 2, **characterized in that** the sensor (26) is integrated into the actuator (14, 14A, 14B).

4. The operating method according to claim 2, **characterized in that** the sensor (26) is integrated into a remote control (60) of the actuator (14, 14A, 14B), which a person operating on the installation affixes on a reference surface (64) of the device.

5. The operating method according to any one of the preceding claims, **characterized by** the transmission, by the detection unit (22), of a signal representative of the detected incline of the reference axis (28, 128) or a deviation between the detected incline of the reference axis (28, 128) and a predefined direction or a predefined plane.

6. The operating method according to claim 5, **characterized in that** the transmission of a signal includes at least the transmission of a signal perceptible by a person operating on the device (10) for its installation or maintenance, in particular a visual or auditory signal.

7. The operating method according to any one of claims 5 or 6, **characterized by** a corrective repositioning action of the reference axis (28, 128) in response to the signal, by a person operating on the installation (10) for its installation or maintenance.

8. The operating method according to any one of claims 5 to 7, **characterized in that** the transmission of a signal includes at least the transmission of a signal intended for a control circuit (24) of the device.

9. The operating method according to claim 8, **characterized in that** it further includes storage of the detected incline in a memory associated with the detection unit, and the deferred reading of the memory.

10. The operating method according to any one of claims 8 or 9, **characterized in that** the signal triggers a corrective action by the control circuit (24) of the actuator (14, 14A, 14B).

11. The operating method according to claim 10, **characterized in that** the corrective action is a repositioning action taken by the actuator (14).

12. The operating method according to claim 7 or claim 11, **characterized in that** the repositioning action seeks to align the reference axis (28, 128) with the predefined direction or to replace the reference axis in the predefined plane.

13. The operating method according to any one of the preceding claims, **characterized in that** the reference axis (28) is combined with, parallel to or perpendicular to the rotation axis (32) of the driveshaft (34) of the electromechanical actuator (14) or the winding shaft.

14. The operating method according to any one of claims 1 to 12, **characterized in that** the reference axis (128) is combined with, parallel to or perpendicular to an edge of a printed circuit (24) of the actuator (14).

15. The operating method according to claim 14 and claim 8, **characterized in that** the control circuit (24) inhibits or reactivates a recognition or learning procedure for a winding or unwinding direction of the winding shaft when the signal is in a predetermined range.

16. The operating method according to any one of the preceding claims, **characterized in that** the detection of a static incline of the reference axis (28, 128) by the detection unit (22) is done only when stopped.

17. The operating method according to any one of the preceding claims, **characterized in that** the detection of a static incline of the reference axis (28, 128) by the detection unit (22) is done only in a predefined position, or in a limited number of predefined positions of the winding shaft (12).

18. A motorized driving device (10) including at least one winding shaft (12) to deploy and retract a screen (38), at least one electromechanical actuator (14, 14A, 14B) to drive the winding shaft (12) between at least one wound position and one unwound position, **characterized in that** the device includes at least one incline detection unit (22) associated with at least one reference axis (28, 128) connected to the actuator with a winding shaft and including at least one sensor (26) for statically detecting an incline of the reference axis (28, 128).

19. The device according to the preceding claim, **characterized in that** the detection unit includes at least one interface (26) for transmitting at least one signal representative of the detected incline or a deviation between the detected incline and a predefined direction.

20. The device according to the preceding claims, **characterized in that** the transmitted signal is a signal perceptible by a person operating on the device for its installation or maintenance, in particular a visual or auditory signal.

21. The device according to claim 18, **characterized in that** the sensor (26) is an inclinometer.

22. The device according to claim 18 or claim 21, **characterized in that** the sensor (26) is integrated in the actuator.

23. The device according to claim 18 or claim 21, **characterized in that** the sensor (26) is integrated in a remote control (60) of the actuator, the device having a reference face (64) to place a reference face (62) of the remote control (60) there.

24. The device according to any one of claims 18 to 23, **characterized in that** it further
includes a memory for storing a history of the detected incline and an interface for querying the memory.
